# EUROPÄISCHE PATENTSCHRIFT

(11) **EP 2 657 921 B1**
(45) Veröffentlichungstag und Bekanntmachung des Hinweises auf die Patenterteilung: **16.12.2020**
(21) Anmeldenummer: 13154805.9
(22) Anmeldetag: 11.02.2013
(51) Int. Cl.: G08G 1/16, B60W 30/00, B60W 50/00

(54) **Verfahren und Vorrichtung zum Nothalt eines Kraftfahrzeugs**
Method and device for the emergency stopping of a motor vehicle
Procédé et dispositif destinés à l'arrêt d'urgence d'un véhicule automobile

(30) Priorität: 21.04.2012 DE 102012008090
(43) Veröffentlichungstag der Anmeldung: 30.10.2013
(73) Patentinhaber: Volkswagen Aktiengesellschaft, 38440 Wolfsburg (DE)
(72) Erfinder: Bartels, Arne, 38448 Wolfsburg (DE); Mirwaldt, Peter, 38102 Braunschweig (DE)

(56) Entgegenhaltungen:
- EP-A1- 2 314 490
- DE-A1- 10 220 782
- DE-A1-102006 039 682
- US-A1- 2006 058 964
- US-A1- 2010 294 583
- US-A1- 2011 241 862

## Beschreibung

Die Erfindung betrifft ein Verfahren zum sicheren Anhalten eines Kraftfahrzeugs in einem Notfall gemäß dem Oberbegriff des Anspruchs 1 sowie einen Nothalteassistenten gemäß dem Oberbegriff des Anspruchs 7.

Zur Erhöhung der Verkehrssicherheit von Kraftfahrzeugen sind als Nothalteassistenzsystem oder Nothalteassistent bezeichnete Systeme in der Entwicklung, die es ermöglichen eine Fahruntüchtigkeit des Fahrers eines Kraftfahrzeugs mittels eines geeigneten Fahrerüberwachungssystems zu erkennen und bei Vorliegen einer Fahruntüchtigkeit das Fahrzeug ohne Gefährdung des Umgebungsverkehrs in einer sicheren Art und Weise automatisch zum Stillstand zu bringen. Fahruntüchtigkeit kann beispielsweise ein medizinisch bedingter Kontrollverlust des Fahrzeugführers über das Fahrzeug sein, der ein automatisches Überführen des Fahrzeugs in den Stillstand bedingt. Ursachen hierfür können beispielsweise ein Herzinfarkt, Schlaganfall, Insulinschock, Niesanfall, epileptischer Anfall, Ohnmacht etc. sein.

Das Bundesministerium für Bildung und Forschung fördert im Rahmen des Projekts "SmartSenior" die Entwicklung derartiger Nothalteassistenten, wobei es das primäre Ziel des Nothalteassistenten ist, Unfälle durch gesundheitlich bedingte Kontrollverluste zu vermeiden oder zumindest die Schwere solcher Unfälle zu vermindern. Mit der Erkennung einer gesundheitlichen Notfallsituation des Fahrers wird ein Wechsel in einen automatischen Fahrmodus ausgeführt und anschließend ein abgesichertes Nothaltemanöver durchgeführt, d.h. das Fahrzeug wird in einen sicheren Zustand überführt.

Die Entwicklung eines Nothalteassistenten wird durch die Tatsache motiviert, dass der Anteil der älteren Menschen innerhalb der Bevölkerung Deutschlands in den nächsten Jahren erheblich zunehmen wird und die individuelle Mobilität auch für diese Bevölkerungsgruppe ein hohes Gut darstellt. Ein Verzicht auf die individuelle Mobilität aufgrund gesundheitlicher Probleme würde eine erhebliche Einschränkung der Selbstbestimmung dieser Bevölkerungsgruppe darstellen. Dem kann mittels intelligenter Assistenzsysteme entgegen gesteuert und zumindest teilweise abgeholfen werden.

Die Veröffentlichung M. Ardelt et. al.: "Strategie Decision-Making Process in Advanced Driver Assistence Systems", 6th IFAC Symposium Advances in Automotive Control, München, Deutschland, Juli 12-14, 2010, Seiten 566- 571, beschreibt die Anforderungen an einen Nothalteassistenten und dessen allgemeine Systemarchitektur für Autobahnen und autobahnähnliche Fahrstraßen. Dabei wird die aktuelle Fahrfähigkeit des Fahrers durch Auswertung geeigneter Kenngrößen bestimmt und dem Assistenzsystem zur Verfügung gestellt. Wird die Fahruntüchtigkeit des Fahrers festgestellt, so führt das Assistenzsystem einen automatisierten Nothalt durch, wobei vorzugsweise der Pannenstreifen angesteuert wird, wenn die Verkehrssituation dies zulässt. Dazu ist neben einer zuverlässigen Spurführung und Längsführung die Möglichkeit eines abgesicherten Spurwechsels notwendig, um das Fahrzeug von der aktuellen Fahrspur auf den Pannenstreifen oder die Standspur zu lenken. Die Systemarchitektur des Nothalteassistenten ist grob in zwei Blöcke, nämlich Perzeption und Fahrermodell, gegliedert, wobei der Block Perzeption ein exakte Beschreibung der äußeren Umwelt liefert und die Verarbeitung geeigneter Sensorsignale, die Erfassung und Klassifikation von Objekten und die Bestimmung der Position des eigenen Fahrzeugs umfasst. Das Fahrermodell kann als elektronischer Autopilot verstanden werden, der die Aufgabe des Fahrers übernimmt. Dazu gehört die Interpretation der aktuellen Verkehrslage sowie das Bestimmen und Umsetzen einer geeigneten Fahrstrategie bis zum Nothalt.

Ferner ist aus der Druckschrift DE 102 20 782 A1 ein Notfallsystem für ein Kraftfahrzeug bekannt, bei dem ein Fahrerüberwachungssystem eine Fahruntüchtigkeit des Fahrers erkennt und eine Steuereinrichtung bei erkannter Fahruntüchtigkeit das Kraftfahrzeug gesteuert verzögert, wobei die Steuereinrichtung auf die Umfeldsensorik und weitere Funktionen von Fahrerassistenzsystemen, wie beispielsweise eine automatische Querführung oder ein ACC-System, zurückgreift, um das Fahrzeug sicher zum Stillstand oder durch die Fahruntüchtigkeitsphase zu bringen.

Aus der Druckschrift DE 10 2006 039 682 A1 ist ein Verfahren zum Gewährleisten eines sicheren Betriebs eines Kraftfahrzeugs bekannt, bei dem eine Fahrerzustandserkennungseinrichtung überprüft, ob der Fahrer des Kraftfahrzeugs in der Lage ist, das Fahrzeug alleine zu führen. Wird eine Fahruntüchtigkeit des Fahrers erkannt, so werden automatisch geeignete Fahrerassistenzsysteme, wie beispielsweise ein Spurhaltesystem oder ein automatisches Abstands- und Geschwindigkeitsregelsystem, aktiviert, um das Fahrzeug während einer Warnphase vorübergehend zu steuern. Ist der Fahrer nach Ablauf der Warnphase weiterhin fahruntüchtig, so wird das Fahrzeug durch das automatische Abstands- und Geschwindigkeitsregelsystem zum Stillstand gebracht.

Die Druckschrift US 2011 0241862 A1 beschreibt ein Verfahren zum Betrieb eines mit einer automatischen Fahrfunktion mit Notfallmodus ausgestattetes Fahrzeug, wobei eine Vielzahl von spezifischen Bedingungen überwacht werden, die zum bevorzugten und verlässlichen Betrieb des mit dem Notfallmodus ausgestatteten automatischen Fahrens notwendig sind. Das Verfahren implementiert eine Strategie zum Behandeln von Fehlermeldungen und Degradation, um das Fahrzeug in einen gewünschten Zustand zu manövrieren falls der Fahrer nicht in der Lage ist das Fahrzeug zu steuern, wenn zumindest eine der spezifischen Bedingungen entweder nicht erfüllt wird oder nicht erfüllt werden wird.

Bei den bekannten Systemen wählt das Nothaltesystem situativ in Abhängigkeit von den in der Umgebung des Fahrzeugs befindlichen Verkehrsteilnehmern sowie der Anzahl an Fahrstreifen das auszuführende Manöver aus, was zu einem Nothalt im eigenen Fahrstreifen oder einem Fahrstreifenwechsel auf den Standstreifen mit dortigem Nothalt führt.

Nachteilig bei den bekannten Nothaltesystemen ist, dass der so bestimmte Ort des Nothaltes zu einer Gefährdung des Egofahrzeuges und des nachfolgenden Verkehrs führen kann.

Der Erfindung liegt daher die Aufgabe zugrunde, ein Verfahren und eine Vorrichtung zum Ausführen eines abgesicherten Nothaltemanövers mit geringerer Gefährdung des Egofahrzeugs und des nachfolgenden Verkehrs zu schaffen.

Diese Aufgabe wird durch ein Verfahren zum Ausführen eines abgesicherten Nothaltemanövers eines fahrenden Kraftfahrzeugs mit den Merkmalen des Anspruchs 1 sowie durch einen Nothalteassistenten mit den Merkmalen des Anspruchs 7 gelöst. Bevorzugte Ausführungsformen der Erfindung sind Gegenstand der Unteransprüche.

Das erfindungsgemäße Verfahren zum Ausführen eines abgesicherten Nothaltemanövers eines fahrenden Kraftfahrzeugs umfasst die folgenden Schritte:
- Überwachen des Fahrers des Kraftfahrzeugs zur Erzeugung von Fahrerzustandsdaten,
- Bestimmen des Grades der Fahrtüchtigkeit des Fahrers aus den Fahrerzustandsdaten,
- Überführen des Fahrzeugs in einen automatischen Fahrmodus falls der Grad der Fahrtüchtigkeit des Fahrers eine vorgegebene Schwelle unterschreitet sowie Ausführen eines abgesicherten Nothaltemanövers,
- Bestimmen einer risikominimalen Anhalteposition für den Nothalt des Fahrzeugs aus prädiktiven Streckendaten des zukünftigen Streckenverlaufs des Kraftfahrzeugs,
- Anfahren der risikominimalen Anhalteposition mit dem automatischem Fahrmodus, und
- Ausführen des abgesicherten Nothaltemanövers in der risikominimalen Anhalteposition, wobei die prädiktiven Streckendaten aus den Positionsinformationen und den Karteninformationen eines Navigationssystems ermittelt werden und
die Positionsinformationen Höheninformationen eines satellitengestützten Navigationssystems beinhalten, wobei anhand der Höheninformationen ein für den rückwärtigen Verkehr überschaubarer Streckenabschnitt zur Ermittlung der risikominimalen Anhalteposition ausgewählt wird.

Durch die Berücksichtigung von prädiktiven Streckendaten ist es möglich eine risikoarme Nothalteposition zu bestimmen, an der sowohl das Risiko des nothaltenden Fahrzeugs als auch des nachfolgenden Verkehrs vermindert wird, was erheblich zur Verkehrssicherheit beiträgt. Eine risikominimale oder risikoarme Nothalteposition ist daher eine solche mit einem geringen Unfallrisiko. Mit anderen Worten, eine derartige Nothalteposition ist für den nachfolgenden Verkehr frühzeitig erkennbar und kann gefahrlos passiert werden oder es ist ein frühzeitiges Ausweichen oder Bremsen gefahrlos möglich. Die Unfallwahrscheinlichkeit ist daher gering. Ferner sollte die Nothilfeposition für Rettungskräfte möglichst einfach erreichbar sein und die Unfallgefahr für die Rettungskräfte sollte ebenfalls gering sein.

Die prädiktiven Streckendaten werden aus den Positionsinformationen und den Karteninformationen eines Navigationssystems ermittelt. Dabei kann das Navigationssystem über eine Satelittennavigation verfügen, aus deren Signalen neben der aktuellen Position weitere Informationen zur aktuellen Position entnehmbar sind. Ferner kann das Navigationssystem über aktuelle, das Umfeld der derzeitigen Position betreffenden Verkehrsinformationen verfügen, die beispielsweise über verkehrstelematische Dienste zur Verfügung gestellt werden können.

Ferner werden aus den Positionsinformationen eines satellitengestützten Navigationssystems, beispielsweise basierend auf GPS, Höheninformationen abgeleitet, so dass anhand der bereits vorhandenen und den aktuellen Höheninformationen ein für den rückwärtigen Verkehr überschaubarer Streckenabschnitt zur Ermittlung der risikominimalen Anhalteposition ausgewählt werden kann. Auf diese Weise kann beispielsweise verhindert werden, dass ein Fahrzeug nach einem automatischen Fahrstreifenwechsel im automatischen Fahrmodus ein Nothaltmanöver unmittelbar hinter einer Kuppe ausführt, da eine derartige Nothalteposition für das Egofahrzeug, den nachfolgenden Verkehr und auch den später eintreffenden Rettungsdienst gefährlich ist. Stattdessen wird anhand der Höheninformation ein Fahrbahnabschnitt ausgesucht, der für den rückwärtigen Verkehr leicht einsehbar ist.

Weiter bevorzugt werden in den Karteninformationen enthaltene Kurvenradien des prädiktiven Streckenverlaufs zur Ermittlung der risikominimalen Anhalteposition berücksichtigt. Mit anderen Worten, die prädiktiven Streckendaten umfassen unter anderem die Kurvenradien des zukünftigen Streckenverlaufs. Da beispielsweise für bestimmte Kurvenradien eines kurvigen Autobahnabschnitts nicht sichergestellt werden kann, dass nachfolgende Verkehrsteilnehmer ein abgestelltes Fahrzeug rechtzeitig ohne Warndreieck wahrnehmen können, wobei naturgemäß bei einem derartigen Notfall der Fahrer zum ordnungsgemäßen Aufstellen eines Warndreiecks nicht in der Lage ist, wird eine automatische Weiterfahrt durchgeführt, bis eine für den nachfolgenden Verkehr einsehbare Nothalteposition erreicht ist.

Vorzugsweise werden Reaktionszeiten und Bremswege nachfolgender Fahrzeuge aus den Kurvenradien der prädiktiven Streckendaten des zukünftigen Streckenverlaufs ermittelt und zur Ermittlung der risikominimalen Anhalteposition berücksichtigt. Mit dieser Maßnahme wird die Sicherheit der risikominimalen Nothalteposition weiter erhöht, da aus den Kalkulationen der Reaktionszeiten und Bremswege der nachfolgenden Verkehrsteilnehmer Mindestdistanzen berechnet werden können, die das Egofahrzeug in dem eingetretenen Notfall noch zurücklegen muss, um zu einer sicheren Nothalteposition zu gelangen.

Weiter bevorzugt umfassen die prädiktiven Streckendaten Informationen über Baustellen, die ebenfalls zur Ermittlung der risikominimalen Anhalteposition berücksichtigt werden. Ist beispielsweise die Fahrstreifenbreite baustellenbedingt verringert, so besteht in einem Notfall eine erhöhte Gefahr, da nachfolgende Fahrzeuge das aufgrund des Notfalls abgestellte Fahrzeug streifen können und es so zu einem Unfall kommt. In diesem Fall kann es vorteilhaft sein, die risikoarme Nothalteposition so zu wählen, dass eine Vollsperrung des Verkehrs erfolgt. Diese Vollsperrung kann beispielsweise durch eine gleichzeitige Blockierung von zwei Fahrspuren durch das Notfallfahrzeug erreicht werden. Dabei kommt eine solche Nothalteposition innerhalb der Baustelle insbesondere auch dann in Frage, wenn der automatische Fahrmodus beispielsweise aufgrund der Baustellensituation nicht ausführbar ist und daher das Fahrzeug nicht aus dem Baustellenbereich herausgeführt werden kann.

Ferner können vorzugsweise die prädiktiven Streckendaten die Distanz zu Notrufsäulen enthalten, wobei diese Distanz bei der Ermittlung der risikominimalen Anhalteposition berücksichtigt wird. Auf diese Weise kann die Position des risikoarmen Nothaltes noch hinsichtlich der Distanz zu einer Notrufsäule optimiert werden, wodurch ein möglicher Beifahrer oder ein nachfolgender Verkehrsteilnehmer einen Notruf absetzen kann, wenn dies durch eine automatische Notrufmeldung nicht möglich sein sollte, beispielsweise wenn sich das Egofahrzeug in einem Funkloch befindet.

Weiter bevorzugt umfassen die prädiktiven Streckendaten aus der digitalen Karte ersichtliche Standstreifen, Einfädel- oder Ausfädelstreifen, Kreuzungssituationen und/oder Tunnelsituationen, die bei der Ermittlung der risikominimalen Anhalteposition berücksichtigt werden können. Sobald beispielsweise ein Standstreifen aus den Kartendaten vorhersehbar ist, kann das automatisch fahrende Fahrzeug seine Fahrt fortsetzen und auf der Standspur zu einem sicheren Halt kommen, anstatt in der derzeitigen Lage auf dem Fahrstreifen selbst zu halten. Bei Ein- und Ausfahrten ist es möglich, dass das Notfallfahrzeug am Anfang eines Ausfädelstreifens bzw. am Ende eines Einfädelstreifens zum Halt kommt, aber ein direktes Halten vermeidet, wenn sich gerade die Ein- und Ausfädelstreifen von der Autobahn trennen. In diesen Fällen wird der automatische Fahrmodus fortgeführt. Für den Einfädelstreifen bedeutet das eine Weiterfahrt bis zum Ende des Einfädelstreifens oder bis in den sich anschließenden Standstreifen. Für die Ausfädelstreifen bedeutet dies eine Weiterfahrt in die Ausfahrt bis ein Fahrbahnabschnitt mit geringerer Krümmung folgt.

Der erfindungsgemäße Nothalteassistent zur Durchführung des im Vorangegangenen beschriebenen Verfahrens umfasst:
- eine Fahrerüberwachungseinrichtung zur Ermittlung von Fahrerzustandsdaten,
- eine Einrichtung zur Bestimmung und Klassifikation des Grades der Fahrtüchtigkeit des Fahrers aus den Fahrerzustandsdaten,
- eine Navigationseinrichtung einschließlich einer digitalen Karte,
- eine Umfelderkennungseinrichtung mit Umfeldsensorik,
- eine Einrichtung zur Ausführung eines automatischen Fahrmodus und zum Durchführen eines Nothaltemanövers, und
- eine Einrichtung zur Bestimmung einer risikominimalen Anhalteposition für den Nothalt des Fahrzeugs aus prädiktiven Streckendaten der Navigationseinrichtung,
wobei die prädiktiven Streckendaten aus den Positionsinformationen und den Karteninformationen eines Navigationssystems ermittelt werden und
die Positionsinformationen Höheninformationen eines satellitengestützten Navigationssystems beinhalten, wobei anhand der Höheninformationen ein für den rückwärtigen Verkehr überschaubarer Streckenabschnitt zur Ermittlung der risikominimalen Anhalteposition ausgewählt wird.

Durch die Einrichtung zur Bestimmung einer risikominimalen Anhalteposition für den Nothalt des Fahrzeugs aus den prädiktiven Streckendaten wird sowohl das Risiko des nothaltenden Fahrzeugs als auch des nachfolgenden Verkehrs vermindert, was erheblich zur Verkehrssicherheit beiträgt.

Vorzugsweise weist der Nothalteassistent eine Einrichtung zur Warnung der anderen Verkehrsteilnehmer und zur Benachrichtigung von Rettungskräften auf. Die Warnung kann optisch und/oder akustisch erfolgen, während die Benachrichtigung des Rettungsdienstes über eine Mobilfunkverbindung erfolgen kann.

Eine bevorzugte Ausführungsform der Erfindung wird nachfolgend anhand der Zeichnungen erläutert. Dabei zeigt
- Fig. 1: den erfindungsgemäßen Nothalteassistenten in schematischer Darstellung,
- Fig. 2: ein Ablaufdiagramm des Verfahrens zum Durchführen eines abgesicherten Nothaltemanövers eines fahrenden Kraftfahrzeugs,
- Fig. 3: die prädiktiven Streckendaten in Komponentendarstellung, und
- Fig. 4: ein Beispiel einer risikoarmen Nothalteposition bei einer Autobahnfahrt.

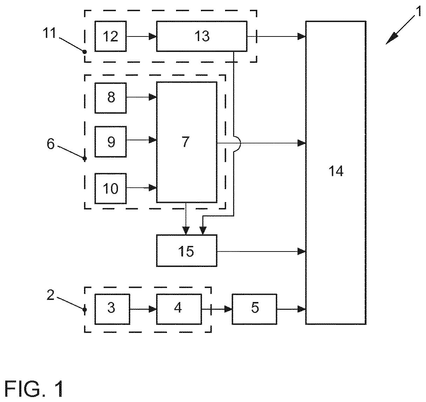

Fig. 1 zeigt eine bevorzugte Ausführungsform des erfindungsgemäßen Nothalteassistenten 1 in schematischer Darstellung. Dabei umfasst der Nothalteassistent 1 eine Fahrerüberwachungseinrichtung 2, die zumindest die Komponenten Sensorik 3 und Einheit 4 zur Bestimmung von Fahrerzustandsdaten aufweist. Aus den Fahrerzustandsdaten wird in einer Einrichtung 5 der Grad der Fahrtüchtigkeit bestimmt und gegebenenfalls klassifiziert. Der Grad der Fahrtüchtigkeit kann beispielsweise als Prozentwert angegeben werden, also beispielsweise 100%ig fahrtüchtig, oder als ein Wahrscheinlichkeitswert, d.h. ein Zahlenwert des abgeschlossenen Intervalls [0, 1]. Sinkt der Grad der Fahrtüchtigkeit unter eine vorgegebene Schwelle, so wird der Fahrer als fahruntüchtig klassifiziert. Es ist möglich, die Klassifizierung in weitere Stufen zu differenzieren, beispielsweise in "fahrtüchtig", "bedingt fahrtüchtig" und "fahruntüchtig", wobei die Klassifizierung durch Vergleiche mit geeignet gewählten Schwellenwerten erfolgen kann. Der Grad der Fahrtüchtigkeit dient als Eingangs- bzw. Steuervariable für die Einrichtung 14, die für die Ausführung des automatischen Fahrmodus und das Nothaltmanöver verantwortlich ist, wobei die Funktion der Einrichtung 14 später näher erläutert wird.

Ferner weist der Nothalteassistent eine Navigationseinrichtung 6 auf, die im Wesentlichen die Komponenten Auswerteeinheit 7, Einheit 8 für Sensorik und Telematik, digitale Karte 9 und Satellitennavigation 10, beispielsweise mittels GPS, umfasst. Mit anderen Worten, die Auswerteeinheit 7 bestimmt die aktuelle Position, sowie aktuelle und prädiktive Streckendaten bezüglich des zukünftigen Streckenverlaufs des Fahrzeugs aus den Daten und Informationen einer geeigneten Sensorik der Einheit 8, beispielsweise Raddrehsensoren zur Bestimmung der Fahrzeugodometrie, sowie Informationen der Einheit 8 hinsichtlich einer Telematik, beispielsweise Informationen von Verkehrsinformationsdiensten, aus den Daten und Informationen der digitalen Karte 9 sowie den Daten des GPS 10. Diese Informationen der Navigationseinrichtung 6 sind für die Einrichtung 14 zum Ausführen des automatischen Fahrmodus und des Nothaltemanövers notwendig.

Weiter weist der Nothalteassistent 1 eine Umfelderkennung 11 auf, die basierend auf den Daten entsprechender Umfeldsensoren 12 in einer Auswertungs- und Erkennungseinheit 13eine Umfelderkennung durchführt und die erkannte Umfeldsituation in geeigneter Weise der Einrichtung 14 zum Ausführen des automatischen Fahrmodus und des Nothaltemanövers zuführt.

Zur Bestimmung einer risikoarmen Nothalteposition werden die von der Einrichtung 7 anhand der aktuellen Position erzeugten prädiktiven Streckendaten des zukünftigen Streckenverlaufs des Fahrzeugs in einer entsprechenden Einrichtung 15 ausgewertet und die aus den prädiktiven Streckendaten ermittelte risikominimale Nothalteposition im Fall eines Notfalls der Einrichtung 14 zum Ausführen des automatischen Fahrmodus und des Nothaltemanövers zugeführt. Ferner können auch die Umfelddaten der Auswertungs- und Erkennungseinheit 13 der Umfelderkennung 11 zur Ermittlung einer risikoarmen Nothalteposition von der Einrichtung 15 herangezogen werden, beispielsweise wenn es in einer engen Baustelle notwendig sein sollte eine Nothalteposition innerhalb der Baustelle zu bestimmen, die aus Sicherheitsgründen zwei Fahrstreifen blockiert.

Die Einrichtung 14 dient, wie bereits erwähnt, zum Ausführen des automatischen Fahrmodus und des Nothaltemanövers basierend auf den Informationen der im Vorangegangenen beschrieben Einrichtungen 2, 6, 11 und 15. Um eine automatischen Fahrmodus durchführen zu können, muss die Einrichtung 14 zumindest in der Lage zur Quer- und Längsführung sowie zum Spurwechsel sein. Ferner erzeugt die Einrichtung 14 entsprechende Steuersignale zur Ansteuerung entsprechender, nicht dargestellter Aktoren zur Betätigung der Lenkung, des Antriebs sowie der Bremsen des Egofahrzeuges.

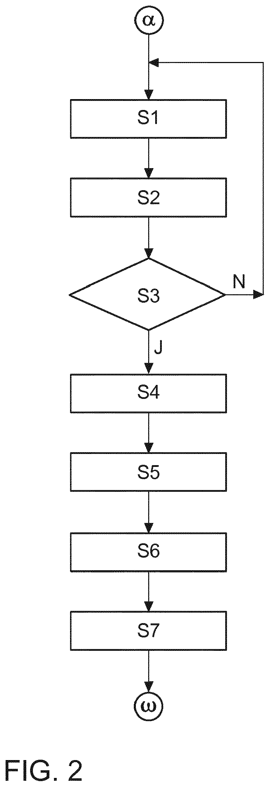

Fig. 2 zeigt den Ablauf des Verfahrens zum Durchführen eines abgesicherten Nothaltemanövers eines fahrenden Kraftfahrzeugs. Nach dem Start α des Verfahrens wird im Schritt S1 eine Überwachung des Fahrers durchgeführt. Dies kann beispielsweise mittels einer Kamera, durch eine Überwachung der Fahreraktivität und/oder auf eine sonstige geeignete Weise erfolgen.

Die Überwachung des Fahrers erzeugt Fahrerzustandsdaten, aus denen im Schritt S2 fortlaufend der Grad der Fahrtüchtigkeit des Fahrers bestimmt wird. Dieser Grad der Fahrtüchtigkeit wird im Folgenden als ε bezeichnet und kann beispielsweise ein Prozentwert oder ein Wert zwischen Null und Eins sein, wobei der Wert Null eine vollständige Fahruntüchtigkeit darstellt und der Wert Eins die vollständige Fahrtüchtigkeit beschreibt.

Im Schritt S3 wird der ermittelte Grad ε der Fahrtüchtigkeit mit einer vorgegebenen Schwelle S verglichen, beispielsweise ε < S. Ist der beispielhafte Vergleich negativ, d.h. der Grad ε der Fahrtüchtigkeit ist größer als der Schwellwert S, so wird von einer Fahrtüchtigkeit des Fahrers ausgegangen und das Verfahren verzweigt mit dem Ausgangskanal N zurück zum Anfang a. Ist der Vergleich positiv, d.h. der Grad der Fahrtüchtigkeit ist kleiner als der Schwellwert, so wird eine Fahruntüchtigkeit des Fahrers angenommen und das Verfahren folgt dem Ausgangskanal J.

Im Fall der Fahruntüchtigkeit des Fahrers wird im Schritt S4 das Fahrzeug des fahruntüchtigen Fahrers in einen automatischen Fahrmodus überführt, in welchem das Fahrzeug in sicherer Weise automatisch fährt. Mit anderen Worten, es wird eine automatische Quer- und Längsführung durchgeführt, sowie gegebenenfalls notwendige Spurwechsel vorgenommen.

Im Schritt S5 wird eine risikominimale Nothalteposition aus prädiktiven Streckendaten bestimmt, die, wie bereits in Bezug zu Fig. 1 beschrieben ist, aus der Navigationseinrichtung und gegebenenfalls aus der Umfelderkennung abgeleitet werden können.

Im Schritt S6 wird mit dem automatischen Fahrmodus die risikoarme Nothalteposition angefahren und im Schritt S7 wird ein abgesichertes Nothaltemanöver durchgeführt, so dass das Fahrzeug mit dem fahruntüchtigen Fahrer in der risikoarmen Nothalteposition zum sicheren Stillstand kommt und Notmaßnahmen erfolgen können. Damit kommt das Verfahren zu einem Ende ω.

Das in der Fig. 2 dargestellte Verfahren ist nur beispielhaft zu verstehen und kann in geeigneter Weise erweitert werden. So kann die Fahrerüberwachung auch während des automatischen Fahrmodus aufrechterhalten werden, so dass im Fall der Wiedererlangung der Fahrtüchtigkeit des Fahrers dieser wieder die Verantwortung über das Fahrzeug übernehmen kann. Ferner kann die Klassifikation des Grades der Fahrtüchtigkeit in weitere Untergruppen unterteilt werden. So kann beispielsweise durch die Verwendung einer weiteren Schwelle S2 eine bedingte Fahrtüchtigkeit des Fahrers definiert werden, wobei das Verfahren den Fahrer bei der Erkennung einer bedingten Fahrtüchtigkeit nur warnt oder die Geschwindigkeit des Fahrzeugs herabsetzt, anstatt die volle Kontrolle über das Fahrzeug zu übernehmen.

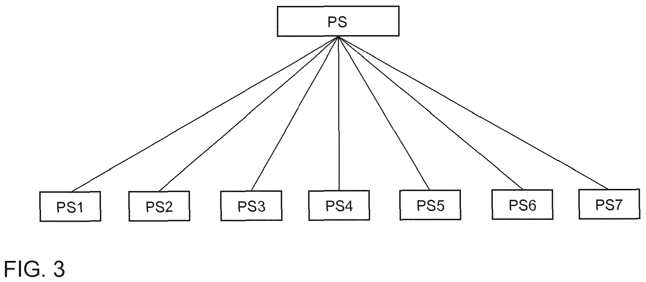

Fig. 3 zeigt die möglichen Komponenten der prädiktiven Streckendaten PS. So können die prädiktiven Streckendaten als Komponente PS1 Höheninformationen enthalten, die aus der Satellitennavigation und der digitalen Karte abgeleitet werden können. So kann verhindert werden, dass das Fahrzeug im Notfall in einer nicht einsehbaren Position hinter einer Kuppe abgestellt wird.

Die Komponente PS2 enthält beispielsweise aus der digitalen Karte entnehmbare Kurvenradien der befahrenen Straße, wodurch ein Abstellen des Fahrzeugs in oder zu kurz hinter einer nicht einsehbaren Kurve verhindert werden kann.

Die Komponente PS3 enthält auf den Kurvenradien und/oder verfügbaren Geschwindigkeitsbegrenzungen beruhende Ermittlungen von Reaktionszeiten und Bremswegen des nachfolgenden Verkehrs, wodurch unter Berücksichtigung der zu erwartenden Geschwindigkeiten des nachfolgenden Verkehrs und eventueller Bremswege eine risikoarme Nothalteposition gewählt werden kann, bezüglich welcher der nachfolgende Verkehr gegebenenfalls noch erfolgreiche Brems- oder Ausweichmanöver durchführen kann.

Die Komponente PS4 enthält Baustelleninformationen, die über eine Verkehrstelematik verfügbar sind. Zu den Baustelleninformationen gehören die Breite der Baustellenfahrbahnen, die Länge der Baustelle, Geschwindigkeitsvorgaben innerhalb der Baustelle, gegebenenfalls Kurven innerhalb der Baustelle und/oder sichere Positionen in der Baustelle, die als Nothaltepositionen geeignet sein können.

Die Komponente PS5 enthält Informationen über Standstreifen entlang des zukünftigen Streckenverlaufs sowie Ein- und Ausfahrten bei autobahnähnlichen Straßen.

Die Komponente PS6 umfasst die Standorte der Notrufsäulen, so dass deren Position in die Auswahl risikoarmer Nothaltepositionen mit einbezogen werden können.

Schließlich enthält die Komponente PS7 sonstige Informationen, die für die Auswahl einer risikoarmen Nothalteposition wichtig sein könne, wie beispielsweise Anzahl der Fahrspuren, Tunnelsituationen im Verlauf der Strecke, Raststätten, Kreuzungen etc.

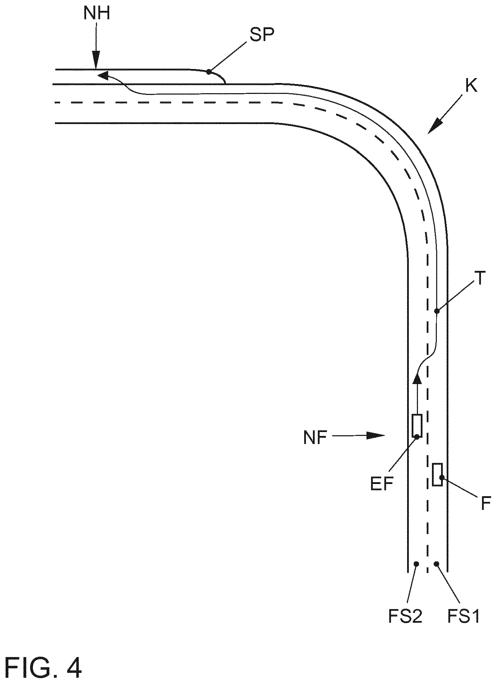

Fig. 4 zeigt ein Beispiel eines Nothaltes eine Egofahrzeuges EF. Dargestellt sind die beiden Fahrspuren FS1 und FS2 einer Fahrtrichtung einer üblichen Autobahnsituation. Das Egofahrzeug EF befindet sich aktuell auf der Überholspur FS2 und hat ein weiteres Fahrzeug F auf der rechten Spur FS1 überholt, als im Punkt NF von dem Nothalteassistenten ein Notfall festgestellt wird, nämlich die Fahruntüchtigkeit des Fahrers des Egofahrzeugs EF. Im Punkt NF übernimmt daher der Nothalteassistent die Kontrolle über das Egofahrzeugs EF und aktiviert den automatischen Fahrmodus. Es wird ein Spurwechsel von der linken Fahrspur FS2 zur rechten Fahrspur FS1 vorgenommen, da der Fahrbahnbereich links des Egofahrzeugs EF frei ist. Da vor der Kurve K die Autobahn keine Standspur SP aufweist, während im weiteren Streckenverlauf hinter der Kurve K eine Standspur SP vorhanden ist, wird der automatische Fahrmodus entlang der Fahrtrajektorie T bis hinter die Kurve K beibehalten, da ein Anhalten auf der Standspur SP sicherer ist als ein Nothalt vor der Kurve K auf der rechten Fahrspur FS1. Ferner wird darauf geachtet, dass der Ort des Nothaltes NH einen ausreichenden Abstand zur Kurve K aufweist, um ein Gefährdung des nachfolgenden Verkehrs, symbolisiert durch das weitere Fahrzeug F, und des Egofahrzeugs EF zu verringern. Der risikoarme Nothalt NH wird entlang der Fahrtrajektorie T nach der Kurve K mit einem weiteren Spurwechsel auf die Standspur SP eingeleitet. Durch ein Nothaltemanöver wird schließlich das Egofahrzeug im Nothalt NH zum Stillstand gebracht.

### Bezugszeichenliste

- 1: Nothalteassistent
- 2: Fahrerüberwachungseinrichtung
- 3: Sensorik
- 4: Einheit zur Bestimmung von Fahrerzustandsdaten
- 5: Bestimmung und Klassifikation des Grades der Fahrtüchtigkeit
- 6: Navigationseinrichtung
- 7: Einrichtung zur Bestimmung von aktuellen und prädiktiven Streckendaten
- 8: Sensorik und Telematik
- 9: digitale Karte
- 10: GPS
- 11: Umfelderkennung
- 12: Umfeldsensorik
- 13: Auswertung und Erkennung
- 14: automatischer Fahrmodus und Nothalt
- 15: Einrichtung zur Bestimmung einer risikominimalen Nothalteposition

- α: Beginn
- S1: Überwachung des Fahrers und Erzeugung von Fahrerzustandsdaten
- S2: Bestimmung des Grades der Fahrtüchtigkeit des Fahrers
- S3: Vergleich der Fahrtüchtigkeit mit einer vorgegebenen Schwelle
- S4: Überführen des Fahrzeugs in einen automatischen Fahrmodus
- S5: Bestimmen einer risikoarmen Nothalteposition
- S6: Anfahren der risikoarmen Nothalteposition
- S7: Ausführen eines abgesicherten Nothaltemanövers und Nothalt in der risikolosen Nothalteposition
- ω: Ende

- PS: prädiktive Streckendaten
- PS1: Höheninformationen
- PS2: Kurvenradien
- PS3: Reaktionszeiten und Bremswege des nachfolgenden Verkehrs
- PS4: Baustelleninformationen
- PS5: Standstreifen, Ein- und Ausfahrten
- PS6: Standort von Notrufsäulen
- PS7: sonstige Informationen wie Anzahl der Fahrspuren, Tunnelsituationen, Raststätten etc.

- FS1: Fahrspur 1
- FS2: Fahrspur 2
- EF: Egofahrzeug
- F: Fahrzeug
- NF: Notfall
- T: Fahrtrajektorie automatischer Fahrmodus
- K: Kurve
- SP: Standspur
- NH: Nothalt

## Patentansprüche

1. Verfahren zum Durchführen eines abgesicherten Nothaltemanövers eines fahrenden Kraftfahrzeugs (EF) mit den folgenden Schritten:
Überwachen des Fahrers des Kraftfahrzeugs zur Erzeugung von Fahrerzustandsdaten (S1),
Bestimmen des Grades der Fahrtüchtigkeit des Fahrers aus den Fahrerzustandsdaten (S2),
Überführen des Fahrzeugs in einen automatischen Fahrmodus falls der Grad der Fahrtüchtigkeit des Fahrers eine vorgegebene Schwelle unterschreitet und Ausführen eines abgesicherten Nothaltemanövers (S3, S4),
Bestimmen einer Anhalteposition für den Nothalt des Fahrzeugs aus prädiktiven Streckendaten (PS) des zukünftigen Streckenverlaufs des Kraftfahrzeugs (S5), wobei die prädiktiven Streckendaten (PS) aus den Positionsinformationen und den Karteninformationen eines Navigationssystems (6) ermittelt werden,
Anfahren der Anhalteposition mit dem automatischem Fahrmodus (S6), und
Ausführen des abgesicherten Nothaltemanövers in der Anhalteposition (S7),
**dadurch gekennzeichnet, dass**
eine risikominimale Anhalteposition bestimmt und angefahren wird, wobei die Positionsinformationen Höheninformationen (PS1) eines satellitengestützten Navigationssystems beinhalten und anhand der Höheninformationen (PS1) ein für den rückwärtigen Verkehr überschaubarer Streckenabschnitt zur Ermittlung der risikominimalen Anhalteposition (NH) ausgewählt wird.

2. Verfahren nach Anspruch 1, **dadurch gekennzeichnet, dass** in den Karteninformationen enthaltene Kurvenradien (PS2) der prädiktiven Streckendaten (PS) zur Ermittlung der risikominimalen Anhalteposition (NH) berücksichtigt werden.

3. Verfahren nach Anspruch 2, **dadurch gekennzeichnet, dass** aus den Kurvenradien (PS2) der prädiktiven Streckendaten (PS) Reaktionszeiten und Bremswege nachfolgender Fahrzeuge (PS3) ermittelt und zur Ermittlung der risikominimalen Anhalteposition (NH) berücksichtigt werden.

4. Verfahren nach einem der vorangegangenen Ansprüche, **dadurch gekennzeichnet, dass** die prädiktiven Streckendaten (PS) Informationen über Baustellen (PS4) enthalten, die zur Ermittlung der risikominimalen Anhalteposition (NH) berücksichtigt werden.

5. Verfahren nach einem der vorangegangenen Ansprüche, **dadurch gekennzeichnet, dass** die prädiktiven Streckendaten (PS) die Distanz zu Notrufsäulen (PS6) enthalten und in die Ermittlung zur Ermittlung der risikominimalen Anhalteposition (NH) einbezogen wird.

6. Verfahren nach einem der vorangegangenen Ansprüche, **dadurch gekennzeichnet, dass** aus den prädiktiven Streckendaten (PS) ersichtliche Standstreifen, Einfädel- oder Ausfädelstreifen, Kreuzungssituationen und/oder Tunnelsituationen (PS7) zur Ermittlung der risikominimalen Anhalteposition (NH) berücksichtigt werden.

7. Nothalteassistent (1) zur Durchführung des Verfahrens nach einem der vorangegangenen Ansprüche mit
einer Fahrerüberwachungseinrichtung (2) zur Ermittlung von Fahrerzustandsdaten, einer Einrichtung (4) zur Bestimmung und Klassifikation des Grades der Fahrtüchtigkeit des Fahrers aus den Fahrerzustandsdaten,
einer Navigationseinrichtung (6) einschließlich einer digitalen Karte (9),
einer Umfelderkennungseinrichtung (11) mit Umfeldsensorik (12), und
einer Einrichtung (14) zur Ausführung eines automatischen Fahrmodus und zum Durchführen eines Nothaltemanövers, und
eine Einrichtung (15) zur Bestimmung einer risikominimalen Anhalteposition für den Nothalt des Fahrzeugs aus prädiktiven Streckendaten der Navigationseinrichtung, wobei die prädiktiven Streckendaten (PS) aus den Positionsinformationen und den Karteninformationen eines Navigationssystems (6) ermittelt werden ,
**dadurch gekennzeichnet, dass**
eine risikominimale Anhalteposition bestimmt und angefahren wird, wobei die Positionsinformationen Höheninformationen (PS1) eines satellitengestützten Navigationssystems beinhalten und anhand der Höheninformationen (PS1) ein für den rückwärtigen Verkehr überschaubarer Streckenabschnitt zur Ermittlung der risikominimalen Anhalteposition (NH) ausgewählt wird.

8. Nothalteassistent nach Anspruch 7, **dadurch gekennzeichnet, dass** der Nothalteassistent (1) eine Einrichtung zur Warnung der anderen Verkehrsteilnehmer und zur Benachrichtigung von Rettungskräften aufweist.

## Claims

1. Method for carrying out a safe emergency stopping manoeuvre or a driving motor vehicle (EF) comprising the following steps:
monitoring the driver of the motor vehicle in order to generate driver state data (S1),
determining the degree of fitness of the driver to drive from the driver state data (S2),
transferring the vehicle into an automatic driving mode if the degree of fitness of the driver to drive undershoots a predefined threshold, and executing a safe emergency driving manoeuvre (S3, S4),
determining a stopping position for the emergency stop of the vehicle from predictive route data (PS) of the future route profile of the motor vehicle (S5), wherein the predictive route data (PS) is determined form the position information and the map information of a navigation system (6),
driving to the stopping position with the automatic driving mode (S6), and
executing the safe emergency stopping manoeuvre in the stopping position (S7),
**characterized in that**
a stopping position with minimal risk is determined and driven to, wherein the position information contains altitude information (PS1) of a satellite-based navigation system, and a route section which can be clearly seen by the traffic to the rear is selected for the determination of the stopping position (NH) with minimal risk on the basis of the altitude information (PS1).

2. Method according to Claim 1, **characterized in that** bend radii (PS2), contained in the map information and relating to the predictive route data (PS), are taken into account for the determination of the stopping position (NH) with minimal risk.

3. Method according to Claim 2, **characterized in that** reaction times and braking distances of vehicles (PS3) travelling behind are determined from the bend radii (PS2) of the predictive route data (PS) and are taken into account for the determination of the stopping position (NH) with minimal risk.

4. Method according to one of the preceding claims, **characterized in that** the predictive route data (PS) contain information about roadworks (PS4), which is taken into account for the determination of the stopping position (NH) with minimal risk.

5. Method according to one of the preceding claims, **characterized in that** the predictive route data (PS) contains the distance from emergency call points (PS6) and is included in the determination for determining the stopping position (NH) with minimal risk.

6. Method according to one of the preceding claims, **characterized in that** hard shoulders, filtering in or filtering out lanes, intersection situations and/or tunnel situations (PS7) that can be seen from the predictive route data (PS) are taken into account for the determination of the stopping position (NH) with minimal risk.

7. Emergency stopping assistant (1) for carrying out the method according to one of the preceding claims, having
a driver monitoring device (2) for determining driver state data,
a device (4) for determining and classifying the degree of fitness of the driver to drive from the driver state data,
a navigation device (6) including a digital map (9),
a surroundings detection device (11) with a surroundings sensor system (12), and
a device (14) for executing an automatic driving mode and for carrying out an emergency stopping manoeuvre, and
a device (15) for determining a stopping position with minimal risk for the emergency stop of the vehicle from predictive route data of the navigation device, wherein the predictive route data (PS) is determined from the position information and the map information of a navigation system (6),
**characterized in that**
a stopping position with minimal risk is determined and driven to, wherein the position information contains altitude information (PS1) of a satellite-based navigation system, and a route section which can be clearly seen by the traffic to the rear is selected for the determination of the stopping position (NH) with minimal risk on the basis of the altitude information (PS1).

8. Emergency stopping assistant according to Claim 7, **characterized in that** the emergency stopping assistant (1) has a device for warning the other road users and for informing emergency services.

## Revendications

1. Procédé pour réaliser une manœuvre d'arrêt d'urgence sécurisée d'un véhicule automobile (EF) circulant, comprenant les étapes suivantes :
surveillance du conducteur du véhicule afin de générer des données d'état de conducteur (S1),
détermination du degré de capacité à conduire du conducteur à partir des données d'état de conducteur (S2), transfert du véhicule dans un mode de conduite automatique dans le cas où le degré de capacité à conduire du conducteur devient inférieur à un seuil prédéfini et exécution d'une manœuvre d'arrêt d'urgence sécurisée (S3, S4),
détermination d'une position d'arrêt pour l'arrêt d'urgence du véhicule à partir de données de parcours prédictives (PS) du futur tracé de parcours du véhicule automobile (S5), les données de parcours prédictives (PS) étant identifiées à partir des informations de position et des informations cartographiques d'un système de navigation (6),
approche de la position d'arrêt avec le mode de conduite automatique (S6) et
exécution de la manœuvre d'arrêt d'urgence sécurisée dans la position d'arrêt (S7)
**caractérisé en ce que**
une position d'arrêt à risque minimal est déterminée et approchée, les informations de position contenant des informations de hauteur (PS1) d'un système de navigation assisté par satellite et une portion de parcours visible pour le trafic à l'arrière étant sélectionnée pour l'identification de la position d'arrêt à risque minimal (NH) à l'aide des informations de hauteur (PS1).

2. Procédé selon la revendication 1, **caractérisé en ce que** les rayons de virage (PS2) des données de parcours prédictives (PS) contenus dans les informations cartographiques sont pris en compte pour l'identification de la position d'arrêt à risque minimal (NH).

3. Procédé selon la revendication 2, **caractérisé en ce que** des temps de réaction et des courses de freinage des véhicules qui suivent (PS3) sont identifiés à partir des rayons de virage (PS2) des données de parcours prédictives (PS) et sont pris en compte pour l'identification de la position d'arrêt à risque minimal (NH) .

4. Procédé selon l'une des revendications précédentes, **caractérisé en ce que** les données de parcours prédictives (PS) contiennent des informations à propos de chantiers (PS4) qui sont prises en compte pour l'identification de la position d'arrêt à risque minimal (NH).

5. Procédé selon l'une des revendications précédentes, **caractérisé en ce que** les données de parcours prédictives (PS) contiennent la distance jusqu'à des bornes d'appel d'urgence (PS6) et sont incluses dans l'identification pour l'identification de la position d'arrêt à risque minimal (NH).

6. Procédé selon l'une des revendications précédentes, **caractérisé en ce que** les bandes d'arrêt d'urgence, les bandes de convergence ou de dégagement, les situations d'intersection et/ou les situations de tunnel (PS7) visibles dans les données de parcours prédictives (PS) sont prises en compte pour l'identification de la position d'arrêt à risque minimal (NH).

7. Assistant d'arrêt d'urgence (1) destiné à mettre en œuvre le procédé selon l'une des revendications précédentes, comprenant
un dispositif de surveillance du conducteur (2) destiné à identifier des données d'état de conducteur,
un dispositif (4) destiné à déterminer et à classifier le degré de capacité à conduire du conducteur à partir des données d'état de conducteur,
un dispositif de navigation (6), y compris une carte numérique (9),
un dispositif de reconnaissance d'environnement (11) doté d'un système de détection d'environnement (12) et
un dispositif (14) destiné à exécuter un mode de conduite automatique et destiné à accomplir une manœuvre d'arrêt d'urgence, et
un dispositif (15) destiné à déterminer une position d'arrêt à risque minimal pour l'arrêt d'urgence du véhicule à partir de données de parcours prédictives du dispositif de navigation, les données de parcours prédictives (PS) étant identifiées à partir des informations de position et des informations cartographiques d'un système de navigation (6), **caractérisé en ce que**
une position d'arrêt à risque minimal est déterminée et approchée, les informations de position contenant des informations de hauteur (PS1) d'un système de navigation assisté par satellite et une portion de parcours visible pour le trafic à l'arrière étant sélectionnée pour l'identification de la position d'arrêt à risque minimal (NH) à l'aide des informations de hauteur (PS1).

8. Assistant d'arrêt d'urgence selon la revendication 7, **caractérisé en ce que** l'assistant d'arrêt d'urgence (1) possède un dispositif servant à alerter les autres acteurs du trafic et à informer des services de secours.
